Europäisches Patentamt

European Patent Office

Office européen des brevets

(11) Veröffentlichungsnummer: **0 167 663**
**B1**

(12) # EUROPÄISCHE PATENTSCHRIFT

(45) Veröffentlichungstag der Patentschrift:
25.11.87

(51) Int. Cl.⁴: **F 16 J 15/32**

(21) Anmeldenummer: **84112259.1**

(22) Anmeldetag: **12.10.84**

(54) **Wellendichtung.**

(30) Priorität: **19.05.84 DE 3418738**

(43) Veröffentlichungstag der Anmeldung:
**15.01.86 Patentblatt 86/3**

(45) Bekanntmachung des Hinweises auf die Patenterteilung:
**25.11.87 Patentblatt 87/48**

(84) Benannte Vertragsstaaten:
**AT BE CH DE FR GB IT LI LU NL SE**

(56) Entgegenhaltungen:
**DE-A-3 323 948**

(73) Patentinhaber: **Firma Carl Freudenberg, Höhnerweg 4, D-6940 Weinheim/Bergstrasse (DE)**

(72) Erfinder: **Forch, Hans, Sandbuckelweg 29, D-6943 Birkenau (DE)**

(74) Vertreter: **Weissenfeld- Richters, Helga, Dr., Höhnerweg 2, D-6940 Weinheim/Bergstrasse (DE)**

## Beschreibung

Die Erfindung betrifft eine Wellendichtung, bestehend aus einem ringförmigen Dichtelement aus polymerem Werkstoff, das mit seiner Dichtfläche elastisch an die durch die Oberfläche der Welle gebildete Gegenfläche angedrückt ist, wobei die Dichtfläche mit wenigstens einem hydrodynamisch wirkenden Rückförderelement für Leckflüssigkeit versehen ist.

Auf eine Wellendichtung der vorgenannten Art nimmt die US-A-35 72 732 Bezug. Diese weist eine ausgezeichnete Betriebssicherheit auf, solange sich die Dichtung in neuwertigem Zustand befindet. Ablagerungen aus dem abgedichteten Medium, insbesondere aus Schmieröl, können diesen Zustand indessen schnell verändern. Ein vorzeitiger Ausfall der Dichtung ist davon die Folge.

Der Erfindung liegt die Aufgabe zugrunde, eine solche Wellendichtung derart weiter zu entwickeln, daß festhaftende Anbackungen im Bereich der dynamischen Abdichtungszone nicht mehr auftreten. Desweiteren soll durch eine verbesserte Kühlung des im Dichtspalt befindlichen Flüssigkeitvolumens die Bildung sogenannter Ölkohle zuverlässig vermieden werden.

Diese Aufgabe wird erfindungsgemäß bei einer Wellendichtung der eingangs genannten Art dadurch gelöst, daß zusätzlich zu der Dichtfläche die Gegenfläche mit wenigstens einem hydrodynamisch wirkenden Rückförderelement mit abweichender Förderwirkung versehen ist. Das insgesamt in dem dynamisch beanspruchten Dichtspalt enthaltene Flüssigkeitsvolumen wird dadurch kontinuierlich umgewälzt und mit der Oberfläche der aus einem metallischen Werkstoff bestehenden Welle in Verbindung gebracht. Eine wesentlich verbesserte Wärmeabführung aus dem dynamischen Dichtspalt ist hiervon die Folge. Eine Überschreitung der kritischen Temperaturen, bei denen die Ausfällung von Ölkohle aus Schmieröl beginnt, wird vermieden.

Die Rückförderelemente auf der Dicht- und der Gegenfläche können eine entgegengesetzte Förderrichtung haben, wenn die hieraus insgesamt resultierende Förderwirkung in Richtung des abgedichteten Raumes weist. Der natürliche Verschleiß kann die diesbezüglich ursprünglich vorhandenen Verhältnisse erheblich verändern. Eine Ausführung, bei der die Rückförderelemente die gleiche und zum abgedichteten Raum weisende Wirkungsrichtung haben, wird deshalb bevorzugt. Die Rückförderelemente können im übrigen in ihrer Ausbildung den bekannten Ausführungen entsprechen, wobei im Hinblick auf eine kostengünstige Herstellbarkeit jedoch Ausführungen der Vorzug gegeben wird, bei denen die Rückförderelemente der Dichtfläche und der Gegenfläche durch wenigatens eine gewendelt verlaufende Nut und/oder Rippe gebildet werden. Rückförderelemente dieser Art lassen sich beispielsweise spanabhebend durch einen Schleif- oder Schneidevorgang erzeugen.

Das Verhältnis D/C aus der Profiltiefe und/oder der Steigung A/B der Rückförderelemente der Dichtfläche und der Gegenfläche beträgt bevorzugt 1:2 bis 1:300, wobei der bevorzugte Bereich durch die Verhältnisse 1:5 bis 1:20 begrenzt ist. Dabei ist es an sich gleichgültig, auf welcher der beiden Seiten die wirksamere Art von Rückförderelementen angeordnet ist, unter herstellungsmäßigen Gesichtspunkten hat es sich indessen als vorteilhaft bewährt, wenn die feinere Ausführung auf seiten der Welle, die grobere Ausführung von hydrodynamisch wirksamen Rückförderelementen hingegen auf der Seite des Dichtelementes vorhanden ist. Ein minimaler Verschleiß der Wellendichtung kann hierbei als Vorteil genutzt werden. Zugleich bedarf die Welle nicht mehr der sehr aufwendigen und bisher für unverzichtbar gehaltenen Feinstbearbeitung ihrer Oberfläche, sondern es genügt eine übliche Feinbearbeitung, wie beispielsweise durch Drehen oder Schleifen mit geringem Vorschub leicht erzielbar.

Die Erfindung wird nachfolgend anhand der in der Anlage beigefügten Zeichnungen weiter erläutert. Es zeigen:

Figur 1 eine Wellendichtung in halbgeschnittener Darstellung.

Figur 2 in vergrößertem Maßstab die Einzelheit "X" aus Figur 1.

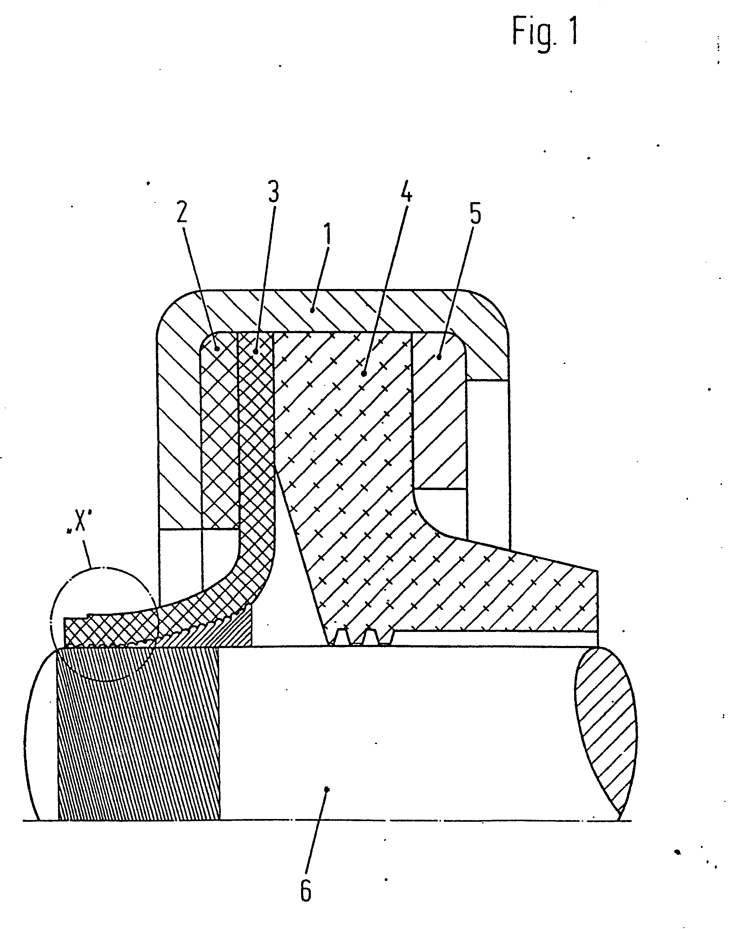

Die in Figur 1 dargestellte Wellendichtung umfaßt den Versteifungsring 1 aus einem metallischen Werkstoff. Dieser weist ein in radialer Richtung nach innen geöffnetes, Uförmiges Profil auf, welches eine Anzahl von kreisringförmig ausgebildeten Elementen 2 bis 5 dichtend umschließt.

Die eigentliche dynamische Abdichtungszone liegt in dem mit "X" bezeichneten Bereich zwischen dem Element 3 und der Oberfläche der Welle 6. Das Element 3 besteht aus einem Fluorkunststoff und ist im Bereich seines Außenumfanges zwischen den beiden Elementen 2 und 4 eingespannt und hierdurch abgedichtet. Das Element 2 besteht aus elastomerem Werkstoff und hat die Funktion einer einfachen Dichtscheibe, das Element 4 besteht aus Fluorkunststoff und ist in radialer Richtung nach innen verlängert und dort in axialer Richtung zur Außenluft hin vorgezogen. Es umschließt die Oberfläche der abgedichteten Welle 6 in engem Abstand und verhindert auf diese Weise eine Beaufschlagung der dynamischen Abdichtungszone "X" mit Fremdstoffen aus der Umgebung. Zugleich wird eine Sicherung gegen übermäßigen Flüssigkeitsaustritt erhalten, die in Funktion tritt, wenn die reguläre Abdichtung im Bereich der dynamischen Dichtungszone "X" infolge unvorhersehbarer Umstände spontan zusammenbricht. Das Element 5 besteht aus einer kreisringförmig ausgebildeten Scheibe aus Metall. Es wird durch den axial anliegenden Flanschvorsprung einer axialen Pressung ausgesetzt, die sich im Bereich des Außenumfanges auf die Elemente 2, 3, 4 überträgt und so deren flüssigkeitsdichte und statisch stabile Festlegung gewährleistet.

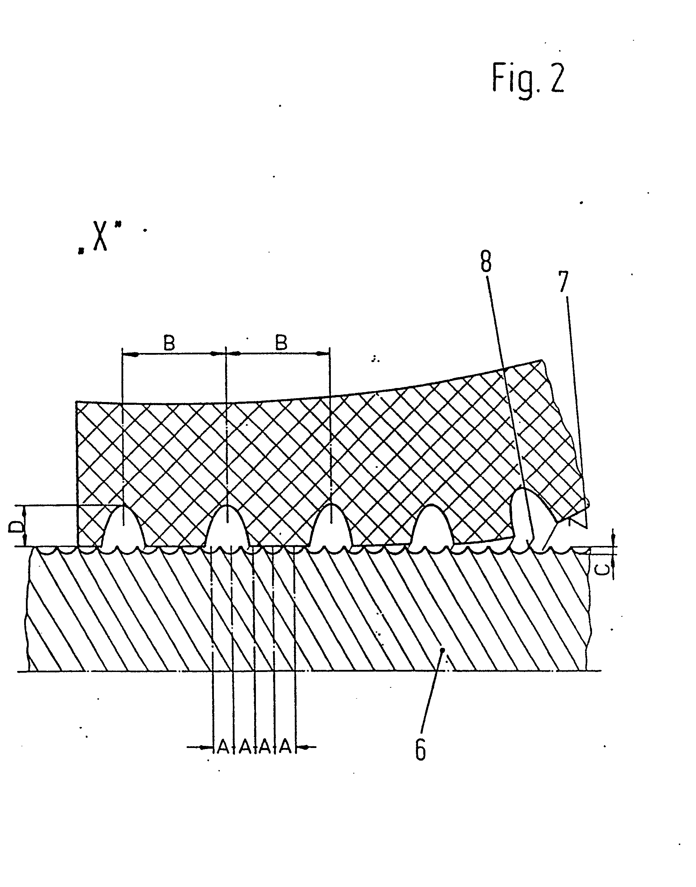

Der Bereich der dynamischen Abdichtungszone "X" gemäß Figur 1 ist in Figur 2 in vergrößerter Darstellung wiedergegeben. Die hydrodynamisch wirkenden Rückförderelemente werden dabei auf der Seite der Gegenfläche 8, welche durch die Oberfläche der abgedichteten Welle 6 gebildet ist, durch eine gewendelt verlaufende Nut gebildet. Diese umschließt jedoch die Gegenfläche ähnlich wie eine Wendelfeder und durchbricht den dargestellten Profilausschnitt aus den Teilen 3 und 6 daher in axialer Richtung mehrfach. Maximale Tiefe C und gegenseitiger Abstand A der den Profilschnitt benachbart durchdringenden Windungen sind durch sehr kleine Werte gekennzeichnet. Der Wert C beträgt etwa 10 bis 20 µm, der Wert A etwa 35 µm. Der zugehörige Durchmesser der abgedichteten Welle 6 beträgt etwa 90 mm.

Die Dichtfläche 7 ist demgegenüber mit Rückförderelementen versehen, die durch eine Vielzahl unabhängiger, sich parallel zueinander erstreckender Nuten gebildet werden. Die Nuten haben eine Tiefe D von 0,02 bis 0,2 mm, zweckmäßigerweise eine solche von 0,1 mm und schließen mit der Rotationsachse einen Winkel von 30 bis 75° ein, vorteilhaft einen solchen von 45°.

## Patentansprüche

1. Wellendichtung, bestehend aus einem ringförmigen Dichtelement (3) aus polymerem Werkstoff, das mit seiner Dichtfläche (7) elastisch an die durch die Oberfläche der Welle gebildete Gegenfläche (8) angedrückt ist, wobei die Dichtfläche (7) mit wenigstens einem hydrodynamisch wirkenden Rückförderelement für Leckflüssigkeit versehen ist, dadurch gekennzeichnet, daß zusätzlich zu der Dichtfläche (7) die Gegenfläche (8) mit wenigstens einem hydrodynamisch wirkenden Rückförderelement versehen ist und daß die Rückförderelemente auf der Dichtfläche und der Gegenfläche eine voneinander abweichende Förderwirkung haben.

2. Wellendichtung nach Anspruch 1, dadurch gekennzeichnet, daß die Rückförderelemente der Dicht- und der Gegenfläche die gleiche Wirkungsrichtung haben.

3. Wellendichtung nach Anspruch 1 bis 2, dadurch gekennzeichnet, daß die Rückförderelemente der Dichtfläche (7) und der Gegenfläche (8) durch wenigstens eine gewendelt verlaufende Nut und/oder Rippe gebildet werden.

4. Wellendichtung nach Anspruch 3, dadurch gekennzeichnet, daß das Verhältnis aus der Profiltiefe C/D und/oder der Steigung A/B der Rückförderelemente der Dichtfläche und Gegenfläche 1:2 bis 1:300 beträgt.

5. Wellendichtung nach Anspruch 4, dadurch gekennzeichnet, daß das Verhältnis 1:5 bis 1:20 beträgt.

## Claims

1. A shaft seal comprising an annular seal element (3) of polymeric material, which is pressed by its sealing surface (7) flexibly against the counter-surface (8) formed by the surface of the shaft, the sealing surface (7) being provided with at least one hydrodynamically acting return element for seepage, characterised in that the counter-surface (8) is also provided with at least one hydrodynamically acting return element and in that the return elements have a differing conveying action on the sealing surface and on the counter-surface.

2. A shaft seal according to claim 1, characterised in that the return elements of the sealing surface and counter-surface have the same direction of action.

3. A shaft seal according to claim 1 or 2, characterised in that the return elements of the sealing surface (7) and of the counter-surface (8) are formed by at least one helical groove and/or rib.

4. A shaft seal according to claim 3, characterised in that the ratio of the profile depth C/D and/or of the pitch A/B of the return elements of the sealing surface and of the counter-surface is 1:2 to 1:300.

5. A shaft seal according to claim 4, characterised in that the said ratio is 1:5 to 1:20.

## Revendications

1. Bague à lèvre constituée d'un élément d'étanchéité annulaire (3) en matériau polymère qui est pressé élastiquement par sa surface d'étanchéité (7) sur la surface opposée (8) constituée par la surface de l'arbre tandis que la surface d'étanchéité (7) comporte au moins un élément de renvoi à action hydrodynamigue pour liquide de fuite caractérisé en ce que, outre la surface d'étanchéité (7) la surface opposée (8) est pourvue d'au moins un élément de renvoi à action hydrodynamique et en ce que les éléments de renvoi sur la surface d'étanchéité et sur la surface opposée ont des effets dde refoulement différant l'un de l'autre.

2. Bague à lèvre selon la revendication 1, caractérisée en ce que les éléments de renvoi de la surface d'étanchéité et de la surface opposée ont la même direction d'action.

3. Bague à lèvre selon les revendications 1 à 2, caractérisée en ce que les éléments de renvoi de la surface d'étanchéité (7) et de la surface opposée (8) sont constitués par au moins une rainure et/ou nervure disposée en spirale.

4. Bague selon selon la revendication 3, caractérisée en ce que le rapport des profondeurs de profil C/D et/ou des pentes A/B des éléments de renvoi de la surface d'étanchéité et de la surface opposée est égal à 1: 2 à 1: 300.

5. Bague à lèvre selon la revendication 4, caractérisée en ce que ce rapport est compris entre 1: 5 et 1: 20.

Fig. 1

Fig. 2

„X"